# EUROPÄISCHE PATENTSCHRIFT

(11) **EP 1 000 533 B1**
(45) Veröffentlichungstag und Bekanntmachung des Hinweises auf die Patenterteilung: **18.02.2004**
(21) Anmeldenummer: 99122434.6
(22) Anmeldetag: 11.11.1999
(51) Int. Cl.: A01D 45/02

(54) **Pflückvorrichtung zum Ernten von Halmfrüchten**
Picking device for harvesting cereals
Dispositif cueilleur pour récolter des céréales

(30) Priorität: 16.11.1998 DE 19852695
(43) Veröffentlichungstag der Anmeldung: 17.05.2000
(73) Patentinhaber: CLAAS Saulgau GmbH, 88340 Bad Saulgau (DE)
(72) Erfinder: Rauch, Hans, 88348 Saulgau-Kleintissen (DE); Reber, Erwin, 88348 Saulgau (DE)

(56) Entgegenhaltungen:
- EP-A- 0 653 152
- AT-B- 301 234
- DE-A- 2 549 136
- DE-A- 19 600 276
- FR-A- 2 373 220
- US-A- 4 796 416
- US-A- 4 901 509
- US-A- 5 330 114

## Beschreibung

Die Erfindung betrifft eine Pflückvorrichtung zum Ernten von Halmfrüchten gemäß dem Oberbegriff des Patentanspruchs 1.
Derartige Pflückvorrichtungen sind im allgemeinen aus Pflückeinheiten aufgebaut, die paarweise zusammenarbeitende ein- oder mehrteilig ausgeführte, unterhalb eines Pflückspalts angeordnete Pflückwalzen aufweisen, deren Umfangsflächen so profiliert sind, daß von diesem Profil ergriffene Halmgutstengel in Achsrichtung der Pflückwalzen und senkrecht dazu zwischen den Walzen hindurch gefördert werden. Gemäß der DE 25 49 136 A1 führt die Profilierung der Pflückwalzen neben dem Stengeltransport zu einer Quetschung des Halmgutstengels, die für eine spätere Verrottung günstige Bedingungen schafft. Die Bearbeitung der Halmgutstengel durch die Pflückwalzen führt jedoch nicht zu deren Zerkleinerung, so daß den paarweise zusammenarbeitenden Pflückwalzen untenseitig wenigstens ein Stengelhäcksler zugeordnet ist, dessen um eine vertikale Achse umlaufenden ebenen Häckselmesser den von den Pflückwalzen in den Arbeitsbereich der Häckselmesser geförderten Halmgutstengel in Abhängigkeit von der Zuführgeschwindigkeit des Halmgutstengels, der Drehzahl des jeweiligen Stengelhäckslers und der Anzahl der Häckselmesser in mehr oder weniger lange Stengelstücke zerschneidet. Die im hackenden Schnitt arbeitenden ebenen Häckseimesser führen dazu, daß das vom Halmgutstengel abgetrennte Stengelstück in Abhängigkeit von den Kräfteverhältnissen zum Zeitpunkt des Durchtrennens in sehr unterschiedliche Richtungen vom Häckselmesser weggeschleudert werden kann. Störungen im Arbeitsprozeß derartiger Pflückvorrichtungen treten immer dann auf, wenn die Stengelstücke in den Bereich der Pflückwalzen oder des Einzugsspaltes geschleudert werden. Zudem wird der durch die Häckselmesser geschnittene, relativ leichte Unterwuchs nur ungenügend aus dem Arbeitsbereich der Häckselmesser abgefördert, so daß sich im Bereich der Pflückwalzen und des Einzugsspaltes ein Schleier aus Unterwuchspartikeln bilden kann, der letztlich zu fünktionsbeeinträchtigenden Verstopfungen führt.
Dem Abhilfe zu schaffen sind gemäß der DE 39 34 862 A1 Pflückvorrichtungen bekannt, deren stengelzerkleinernden Häckseleinrichtungen im ruckwartigen Bereich der Pflückwalzen angeordnet sind Die ebenfalls um vertikale Achsen umlaufenden ebenen Häckselmesser führen zwar ebenfalls zu den bereits beschriebenen Nachteilen, da die Häckseleinrichtungen aber im rückwärtigen Bereich der Pflückorgane angeordnet sind, sinkt ihr funktionsbeeintrachtigender Einfluß auf die Pflückorgane. Die räumliche Trennung der Funktionen Pflücken und Schneiden/Häckseln birgt aber den Nachteil, daß der Pflückvorgang sehr "sanft" erfolgen muß, damit die einenends im Boden fixierten Halmgutstengel nicht aus diesem herausgezogen werden und durch die umlaufenden Pflückwalzen an ihrer Unterseite in ungeordneter Weise entlangbewegt werden, so daß funktionsbeeinträchtigende Verstopfungen auftreten.

Der Erfindung liegt deshalb die Aufgabe zugrunde, eine Pflückvorrichtung zum Ernten von Halmfrüchten gemäß dem Oberbegriff des Anspruchs 1 so zu gestalten, daß die den Pflückeinheiten zugeordneten Häckseleinrichtungen Häckselmesser aufweisen, die einen gerichteten Abtransport sowohl der Stengelstücke als auch des durchtrennten Unterwuchses ermöglichen, um verstopfungsbedingte Funktionsstörungen durch die abgetrennten Stengelstücke und die Unterwuchspartikel an der Pflückeinrichtung zu vermeiden.
Erfindungsgemäß wird die Aufgabe durch eine Pflückvorrichtung zum Ernten von Halmfrüchten mit den kennzeichnenden Merkmalen des Anspruchs 1 gelöst.

Durch die Schränkung der den Häckseleinrichtungen zugeordneten umlaufenden Häckselmesser in der Weise, daß die vorauslaufende radiale Kante wenigstens eines Häckselmessers vertikale versetzt zur nachlaufenden radialen Kante des Häckselmessers angeordnet ist, bildet sich eine Luftströmung aus, die zu einer gerichteten Bewegung der Stengelstücke und der Unterwuchspartikel führt.

In vorteilhafter Weise liegt dabei die vorauslaufende radiale Kante des Häckselmessers in vertikaler Richtung über der nachlaufenden radialen Kante, so daß die schwereren Stengelstücke an der Unterseite des Häckselmessers in Richtung Boden geleitet werden und die leichteren Unterwuchspartikel durch die sich ausbildende, ebenfalls in Richtung Boden weisende Luftströmung den gerichteten Abtransport der Unterwuchspartikel übernimmt.

Durch die Ausbildung der Schränkung nur über einen Teilbereich der Häckselmesser wird zudem eine kostengünstige, einen geringeren Herstellungsaufwand verursachende Ausführung der Häckselmesser erreicht.

In vorteilhafter Weise wird die Schneidfunktion der Häckselmesser dadurch verbessert, daß auch die Strinseite des Häckselmessers über eine Schneidkante verfügt.

Um die Standzeit der Häckselmesser zu erhöhen, ist in einer weiteren vorteilhaften Ausbildung vorgesehen, die vorauslaufende und die nachlaufende radiale Kante der Häckselmesser mit um 180° zueinander versetzten Schneidkanten zu versehen. Auf diese Weise kann bei auftretendem verschleißbedingten Abstumpfen einer Schneidkante das gleiche Messer nochmals eingesetzt werden, ohne zuvor ein Anschleifen der abgestumpften Schneidkante vornehmen zu müssen.

Um auch das Schneiden der sirnseitigen Schneidkante des Häckselmessers bei dessen verschleißbedingter Drehung um 180° weiterhin zu gewährleisten, sieht eine weitere vorteilhafte Ausgestaltung vor, die Strinseite des Häckselmessers oben- und untenseitig mit einer Schneidkante zu versehen.

Vorteilhafte Ausgestaltungen sind Gegenstand weiterer Unteransprüche und werden nachfolgend anhand eines in Zeichnungen dargestellten Ausführungsbeispiels näher erläutert.

Es zeigen
- Figur 1: schematisch eine erfindungsgemäße Pflückvorrichtung von der Seite

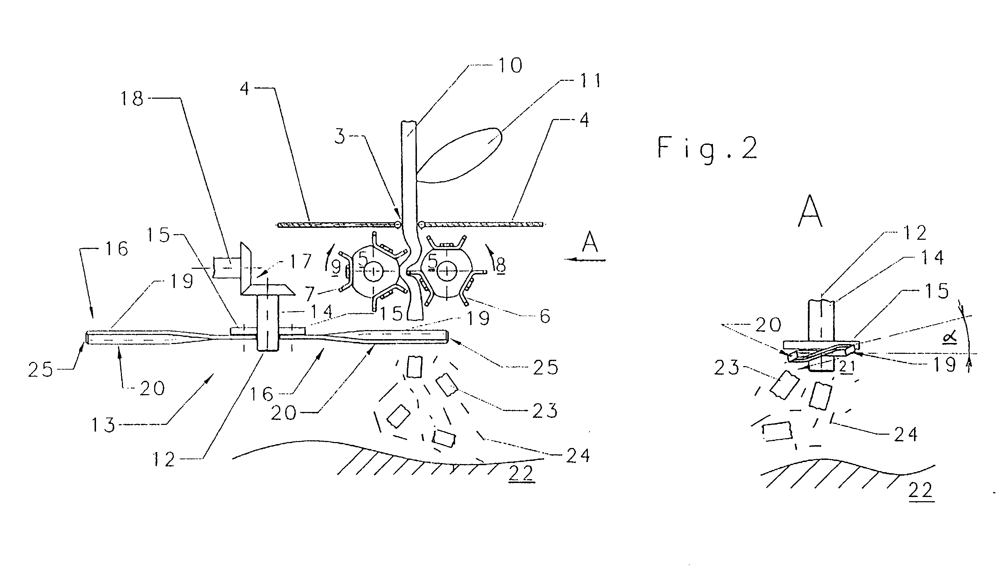

- Figur 2: eine Detailvorderansicht der Pflückvorrichtung mit erfndungsgemäßem Strohhäcksler.

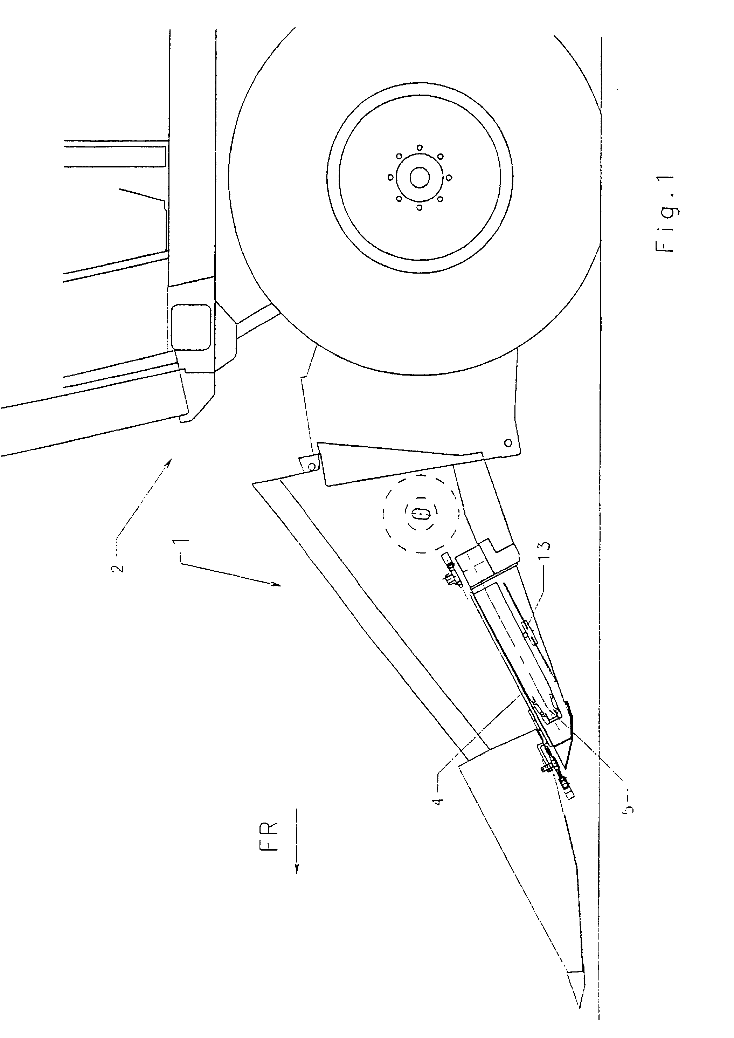

Figur 1 zeigt schematisch eine erfindungsgemäße Pflückvorrichtung 1 zum Ernten von Halmfrüchten, die in ihrem rückwärtigen Bereich an einem nicht näher dargestellten Trägerfahrzeug 2, vorzugsweise einem Mähdrescher oder Häcksler adaptiert ist. Die Pflückvorrichtung 1 verfügt in ihrem in Fahrtrichtung FR vom liegenden Bereich über einen oder mehrere Pflückspalte 3 bildende Pflückspaltplatten 4, wobei den Pflückspalten 3 untenseitig paarweise angeordnete ein- oder mehrteilig ausgeführte zylindrische oder konische Pflückwalzen 5 zugeordnet sind, die an ihrem Umfang Profilsegmente 6, 7 aufweisen. Durch den gegenläufigen Antrieb der Pflückwalzen (Pfeilrichtung 8, 9) wird der von den Profilsegmenten 6, 7 erfaßte Halmgutstengel 10 in vertikaler Richtung nach unten eingezogen, wobei im Bereich des Pflückspalts 3 die Fruchtstände 11 abgestriffen werden. Dabei erfährt der Halmgutstengel 10 die Verrottung fördernde Derformationen, bleibt aber in seiner stengeligen Form erhalten. Unterhalb der Pflückwalzen 5 ist jedem Pflückspalt 3 ein um eine vertikale Achse 12 umlaufender Stengelhäcksler 13 zugeordnet, dessen Abtriebswelle 14 Adaptierflansche 15 aufweist, die die erfindungsgemäßen Häckselmesser 16 lösbar aufnehmen, wobei die Anzahl der Häckselmesser 16 nicht auf die des dargestellten Ausführungsbeispiels beschränkt ist. Auf konstruktiv einfache Weise ist die Abtriebswelle 14 über ein Kegelradpaar 17 mit einer Antriebswelle 18 und einem an sich bekannten und deshalb nicht dargestellten Antrieb verbunden. Je nach dem, ob der Stengelhäcksler 13 links- oder rechtsseitig unterhalb des Pflückspalts 3 angeordnet ist und ob der Stengelhäcksler 13 im Uhrzeigersinn oder entgegen dem Uhrzeigersinn angetrieben ist, sind die erfindunggemäß geschränkten Häckselmesser 16 so an dem jeweiligen Adaptierflansch 15 befestigt, daß ihre vorauslaufende, als Schneide ausgeführte radiale Kante 19 in vertikaler Richtung über der nachlaufenden radialen Kante 20 des Häckselmessers 16 liegt, so daß die schränkungsbedingte Neigung des Häckselmessers 16 bei Rotation einen Luftstrom 21 in Richtung Boden 22 erzeugt. Die durch die Häckselmesser 16 vom Halmgutstengel 10 abgetrennten Stengelstücke 23 werden dabei an der sich schränkungsbedingt ergebenden Schräge zwischen vorauslaufender radialer Kante 19 und nachlaufender radialer Kante 20 in Richtung Boden 22 geleitet, während die ebenfalls von den Häckslemessern 16 vom Unterwuchs abgetrennten Unterwuchspartikel 24 vorwiegend durch die sich ausbildende Luftströmung 21 in Richtung Boden 22 bewegt werden. In vorteilhafter Weise liegt der Schränkungswinkel α in einem Bereich von 10 - 20°. Zur Reduzierung der Herstellungskosten kann die Schränkung wie dargestellt nur am radial äußeren Bereich der Häckselmesser 16 ausgebildet sein.
Zur Erhöhung der Standzeit der Häckselmesser kann neben der radial vorauslaufenden Kante 19 des Häckselmessers 16 auch dessen nachlaufende radiale Kante 20 als Schneidkante ausgeführt sein, wobei beide Schneidkanten 19, 20 um 180° zueinander versetzt angeordnet sind, so daß durch einfaches Wenden der Häckselmesser 16 am Adaptierflansch 15 die abgestumpfte Schneidkante der vorauslaufenden radialen Kante 19 dann die nachlaufende radiale Kante 20 und umgekehrt, die vormals nachlaufende radiale Kante 20 dann die vorauslaufende radiale Kante 19 bildet, ohne daß ein Anschleifen erforderlich wird. In an sich bekannter Weise kann auch die Strinseite 25 der Häckselmesser 16 ein- oder beidseitig als Schneidkante ausgeführt sein, so daß unabhängig von der Einbaulage der Häckselmesser 16 immer auch ein Schneiden an deren Strinseite 25 möglich ist.

Es liegt im Rahmen der Erfindung, daß die offenbarten Häckselmesser 16 in beliebiger Anzahl einem Stengelhäcksler 13 zugeordnet sein können und jeder die erfindungsgemäßen Häckselmesser 16 aufweisende Stengelhäcksler 13 in beliebiger Anzahl direkt jedem Pflückspalt untenseitig zugeordnet oder ebenfalls in beliebiger Anzahl im rückwärtigen Bereich der Pflückvorrichtung 1 angebracht sein kann.

### Bezugszeichenliste

- 1: Pflückvorrichtung
- 2: Trägerfahrzeug
- 3: Pflückspalt
- 4: Pflückspaltplatte
- 5: Pflückwalze
- 6: Profilsegment
- 7: Profilsegment
- 8: Pfeilrichtung
- 9: Pfeilrichtung
- 10: Halmgutstengel
- 11: Fruchtstand
- 12: vertikale Achse
- 13: Stengelhäcksler
- 14: Abtriebswelle
- 15: Adaptierflansch
- 16: Häckselmesser
- 17: Kegelradpaar
- 18: Antriebswelle
- 19: vorauslaufende radiale Kante
- 20: nachlaufende radiale Kante
- 21: Luftstrom
- 22: Boden
- 23: Stengelstück
- 24: Unterwuchspartikel
- 25: Strinseite

- FR: Fahrtrichtung
- α: Schränkungswinkel

## Patentansprüche

1. Pflückvorrichtung zum Ernten von Halmfrüchten, insbesondere Mais, die über wenigstens eine Pflückwalzen (5) aufweisende Pflückeinheit verfügt, der untenseitig zumindest ein Stengelhäcksler (13) zugeordnet ist, wobei der Stengelhäcksler ein oder mehrere, um eine vertikale Achse (12) umlaufende Häckselmesser (16) aufweist,
**dadurch gekennzeichnet,**
**daß** wenigstens ein Häckselmesser (16) des Stengelhäckslers (13) in der Weise geschränkt ist, daß die vorauslaufende radiale Kante (19) des Häckselmessers (16) zur nachlaufenden radialen Kante (20) des Häckselmessers (16) in vertikaler Richtung versetzt angeordnet ist.

2. Pflückvorrichtung zum Ernten von Halmfruchten nach Anspruch 1,
**dadurch gekennzeichnet,**
**daß** die vorauslaufende radiale Kante (19) des Häckselmessers (16) in vertikaler Richtung über der nachlaufenden radialen Kante (20) des Häckselmessers (16) liegt.

3. Pflückvorrichtung zum Ernten von Halmfruchten nach einem oder mehreren der vorhergehenden Ansprüche,
**dadurch gekennzeichnet,**
**daß** sich die Schränkung des Häckselmessers (16) nur über einen Teilbereich des Häckselmessers (16) erstreckt.

4. Pflückvorrichtung zum Ernten von Halmfruchten nach einem oder mehreren der vorhergehenden Ansprüche,
**dadurch gekennzeichnet,**
**daß** der Schränkungswinkel (α) in einem Bereich von 10-20° liegt.

5. Pflückvorrichtung zum Ernten von Halmfruchten nach einem oder mehreren der vorhergehenden Ansprüche,
**dadurch gekennzeichnet,**
**daß** die vorauslaufende radiale Kante (19) und die nachlaufende radiale Kante (20) des Häckselmessers (16) eine um 180° zueinander versetzt angeordnete Schneidkante (19, 20) aufweisen.

6. Pflückvorrichtung zum Ernten von Halmfrüchten nach einem oder mehreren der vorhergehenden Ansprüche,
**dadurch gekennzeichnet,**
**daß** die Strinseite (25) des Häckselmessers (16) als Schneidkante ausgebildet ist.

7. Pflückvorrichtung zum Ernten von Halmfrüchten nach Anspruch 6,
**dadurch gekennzeichnet,**
**daß** die Schneidkante an der Strinseite (25) des Häckselmessers (16) beidseitig ausgebildet ist.

8. Pflückvorrichtung zum Ernten von Halmfrüchten nach einem oder mehreren der vorhergehenden Ansprüche,
**dadurch gekennzeichnet,**
**daß** jedem Pflückspalt (3) wenigstens ein Stengelhäcksler (13) zugeordnet ist.

9. Pflückvorrichtung zum Ernten von Halmfrüchten nach einem oder mehreren der vorhergehenden Ansprüche,
**dadurch gekennzeichnet,**
**daß** jeder Stengelhäcksler (13) mehrere Häckselmesser (16) aufweisen kann.

## Claims

1. A picking apparatus for harvesting stalk crops, in particular corn, having at least one picking unit which has picking rollers (5) and with which at least one stalk cutter (13) is associated at the underside, wherein the stalk cutter has one or more cutter blades (16) rotating about a vertical axis (12), **characterised in that** at least one cutter blade (16) of the stalk cutter (13) is set in such a way that the leading radial edge (19) of the cutter blade (16) is arranged displaced in a vertical direction relative to the trailing radial edge (20) of the cutter blade (16).

2. A picking apparatus for harvesting stalk crops according to claim 1 **characterised in that** the leading radial edge (19) of the cutter blade (16) is disposed in a vertical direction above the trailing radial edge (20) of the cutter blade (16).

3. A picking apparatus for harvesting stalk crops according to one or more of the preceding claims **characterised in that** the set of the cutter blade (16) extends only over a partial region of the cutter blade (16).

4. A picking apparatus for harvesting stalk crops according to one or more of the preceding claims **characterised in that** the set angle (α) is in a range of 10 - 20°.

5. A picking apparatus for harvesting stalk crops according to one or more of the preceding claims **characterised in that** the leading radial edge (19) and the trailing radial edge (20) of the cutter blade (16) have a cutting edge (19, 20) arranged displaced relative to each other through 180°.

6. A picking apparatus for harvesting stalk crops according to one or more of the preceding claims **characterised in that** the end (25) of the cutter blade (16) is in the form of a cutting edge.

7. A picking apparatus for harvesting stalk crops according to claim 6 **characterised in that** the cutting edge at the end (25) of the cutter blade (16) is provided at both sides.

8. A picking apparatus for harvesting stalk crops according to one or more of the preceding claims **characterised in that** at least one stalk cutter (13) is associated with each picking gap (3).

9. A picking apparatus for harvesting stalk crops according to one or more of the preceding claims **characterised in that** each stalk cutter (13) can have a plurality of cutter blades (16).

## Revendications

1. Dispositif de récolte de céréales, en particulier de maïs, comportant une unité cueilleuse avec au moins un tambour cueilleur (5), qui est associé dans sa partie inférieure à au moins un broyeur de tiges (13), le broyeur de tiges présentant un ou plusieurs couteaux de broyeur (16) qui tournent autour d'un axe (12) vertical, **caractérisé en ce qu'**au moins un couteau (16) du broyeur de tiges (13) est avoyé, de telle sorte que le bord radial (19) du couteau de broyeur (16) en avance est décalé dans la direction verticale par rapport au bord radial (20) en retard dudit couteau de broyeur (16).

2. Dispositif de récolte de céréales selon la revendication 1, **caractérisé en ce que** le bord radial (19) en avance du couteau de broyeur (16), dans la direction verticale, est situé au-dessus du bord radial (20) en retard du couteau de broyeur (16).

3. Dispositif de récolte de céréales selon une ou plusieurs des revendications précédentes, **caractérisé en ce que** la voie du couteau de broyeur (16) s'étend seulement sur une zone partielle dudit couteau de broyeur (16).

4. Dispositif de récolte de céréales selon une ou plusieurs des revendications précédentes, **caractérisé en ce que** l'angle de voie (α) est compris dans une plage allant de 10 à 20°.

5. Dispositif de récolte de céréales selon une ou plusieurs des revendications précédentes, **caractérisé en ce que** le bord radial (19) en avance et le bord radial (20) en retard du couteau de broyeur (16) présentent des arêtes de coupe (19, 20) mutuellement décalées de 180°.

6. Dispositif de récolte de céréales selon une ou plusieurs des revendications précédentes, **caractérisé en ce que** la face frontale (25) du couteau de broyeur (16) est conformée en arête de coupe.

7. Dispositif de récolte de céréales selon la revendication 6, **caractérisé en ce que** l'arête de coupe est aménagée des deux côtés sur la face frontale (25) du couteau de broyeur (16).

8. Dispositif de récolte de céréales selon une ou plusieurs des revendications précédentes, **caractérisé en ce qu'**à chaque fente de cueilleur (3) est associé au moins un broyeur de tiges (13).

9. Dispositif de récolte de céréales selon une ou plusieurs des revendications précédentes, **caractérisé en ce que** chaque broyeur de tiges (13) peut comporter plusieurs couteaux de broyeur (16).
